Europäisches Patentamt

European Patent Office

Office européen des brevets

(11) Veröffentlichungsnummer : **0 310 104 B1**

## (12) EUROPÄISCHE PATENTSCHRIFT

(45) Veröffentlichungstag der Patentschrift :
19.06.91 Patentblatt 91/25

(51) Int. Cl.⁵ : **F17C 7/04, F17C 13/04,**
**G05D 16/20**

(21) Anmeldenummer : 88116155.8

(22) Anmeldetag : 30.09.88

(54) **Verfahren und Vorrichtung zum Entleeren von mit Gas gefüllten Behältern.**

(30) Priorität : 02.10.87 DE 3733442

(43) Veröffentlichungstag der Anmeldung :
05.04.89 Patentblatt 89/14

(45) Bekanntmachung des Hinweises auf die
Patenterteilung :
19.06.91 Patentblatt 91/25

(84) Benannte Vertragsstaaten :
AT BE DE ES FR NL

(56) Entgegenhaltungen :
EP-A- 0 026 934
EP-A- 0 124 405
DE-A- 2 441 886
DE-B- 1 257 176

(56) Entgegenhaltungen :
US-A- 4 019 524
US-A- 4 202 180
PATENT ABSTRACTS OF JAPAN, Band 8, Nr.
202 (P-300)[1639], 14. September 1984; & JP-
A-59 87 503 (HITACHI SEISAKUSHO K.K.) 21-
05-1984

(73) Patentinhaber : Linde Aktiengesellschaft
Abraham-Lincoln-Strasse 21
W-6200 Wiesbaden (DE)

(72) Erfinder : Meinass, Helmut, Dipl.-Ing.
Dompfaffenweg 12
W-8192 Geretsried (DE)

(74) Vertreter : Schaefer, Gerhard, Dr.
Linde Aktiengesellschaft Zentrale
Patentabteilung
W-8023 Höllriegelskreuth (DE)

## Beschreibung

Die Erfindung betrifft ein Verfahren zur Entnahme von Gas aus Gasbehältern, in denen Gas unter Druck in einem Lösungsmittel gelöst gespeichert ist, wobei die Gasbehälter in zwei Gruppen aufgeteilt werden und bei dem zu der jeweiligen Behältergruppe gehörende Entnahmeleitungen mit zugehörigen Absperrventilen und Druckreglern oder Druckregelersystemen (=DRS) herangezogen werden, wobei die Entnahmeleitungen anschließend in eine gemeinsame Verbraucherleitung münden und wobei eine Behältergruppe durch eine um eine geringfügige Differenz höhere Einstellung des zugehörigen Druckreglers (DRS) bevorzugt entleert wird, und bei dem nach Entleerung und Erneuerung einer Behältergruppe eine Umschaltung der bevorzugten Entleerung auf die andere Behältergruppe durchgeführt wird.

Die Versorgung technischer Anlagen mit unter Druck in Lösungsmittel gelösten Gasen, z.B. Acetylen, bereitet besondere Probleme, da einerseits solche Gase aus Sicherheitsgründen nur mit verhältnismäßig geringem und bei Verbrauch abnehmendem Flaschendruck vorliegen (Anfangsdruck ca. 20 bar) und andererseits eine druckkonstante Versorgung mit eventuell wechselndem Mengenbedarf erwünscht ist.

Es ist bekannt, die Behälter mit Hilfe von einem oder mehreren parallel geschalteten Druckreglern so lange zu entleeren, bis die aus den Flaschen freiwerdende Gasmenge nicht mehr ausreicht, um einen Verbraucher zu versorgen. Dabei besteht zusätzlich das Problem, daß der Gasinhalt von z.B. Acetylenflaschen nur dann vollständig, d.h. bis auf die Sättigungsmenge genutzt werden kann, wenn die pro Zeiteinheit entnommene Gasmenge sehr niedrig gewählt wird und das Gas auf einen sehr niedrigen Hinterdruck entspannt wird. Sobald aber eine der genannten Bedingungen nicht erfüllt ist, die Flaschen also einer hohen oder unregelmäßigen Belastung ausgesetzt sind oder mit einem hohen Hinterdruck gearbeitet wird, bleibt neben dem Sättigungsgas noch nutzbares Gas in den Flaschen zurück. Ein Grund hierfür ist z.B. daß die bei der Entnahme aus den Flaschen benötigte Austreibungs- oder Verdampfungswärme nicht ausreichend schnell in die Flaschen eingebracht werden kann. Ein weiterer Grund für die unzureichende Entleerung ist, daß der Druckverlust in den Druckreglern bei sinkendem Vordruck extrem ansteigt.

Um nun eine bessere Ausnutzung des Behälterinhalts und eine bessere Druckkonstanz zu erreichen, werden heute oft zwei Behältergruppen gebildet, an die zwei Entnahmeleitungen mit leicht unterschiedlich eingestellten Druckreglern angeschlossen werden. Dies führt dazu, daß Gas zunächst nur aus der Behältergruppe entnommen wird, der der höher eingestellte Druckregler zugeordnet ist. Fällt der Behälterdruck in dieser Behältergruppe unter einen zur Versorgung kritischen Wert, und sinkt infolgedessen der Druck in der Verbraucherleitung, so wird aus der zweiten Behältergruppe ebenfalls Gas eingespeist, wobei in der ersten Behältergruppe entstehendes Gas weiterhin vorrangig entnommen wird.

Ein Gasentnahmeverfahren mit zwei Behältergruppen und zwei Druckreglersystemen, die, wie gesagt, auf zwei leicht verschiedene Drucke eingestellt sind, liefert bei etwa gleichbleibendem Mengenbedarf Gas mit gleichgleibendem Druck etwa solange, wie die Gasentnahme aus nur einer Behältergruppe erfolgt. In denjenigen Phasen aber, in der aus der primär entleerten Seite nicht mehr genügend Gas geliefert wird, wird von der Sekundärseite fehlendes Gas eingespeist, allerdings-entsprechend der Voreinstellung dieser Seite-mit etwas niedrigerem Druck. Dies führt zu Druckschwankungen in der Verbraucherleitung, wobei sich das Druckniveau bei fast vollständiger Entleerung der Primärseite auf das auf der Sekundärseite vorgegebene Niveau senkt.

Nachteilig bezüglich der Druckkonstanz während der Entleerungsphase wirken sich darüber hinaus prinzipielle Eigenschaften einfacher Druckregler aus. Druckregler sind Regeleinheiten, die einen höheren

Vordruck auf einen bestimmten niedrigeren Hinterdruck reduzieren. Nimmt der Vordruck allerdings unterschiedliche Werte an, z.B. wie beim Entleeren eines Gasbehälters, so ist das Regelverhalten eines Druckreglers in den verschiedenen Vordruckphasen unterschiedlich und insbesondere bei niedrigem Vordruck ungünstig. Deshalb finden heute weitgehend statt einfacher Druckregler Druckreglersysteme Anwendung, bei denen dem eigentlichen Druckregler weitere, konstanten Vordruck liefernde Druckregler, die mit zusätzlichem Hilfsgas betrieben werden, vorgeschaltet sind. Den vorgeschalteten Druckreglern wird dabei der gewünschte Solldruckwert zugeführt.

Ein weiteres Problem stellt aber weiterhin wechselnder Gasmengenbedarf dar. Oben beschriebene Druckreglersysteme liefern unterschiedliche Bedarfsmengen bei gleichem Vordruck mit etwas unterschiedlichem Hinterdruck, d.h. daß sich bei Wechsel von einer Bedarfsmenge auf eine andere in der Verbraucherleitung der Druck etwas ändert. Auch eine solche Druckschwankung ist unerwünscht und kann zu Störungen bei den Gasverbrauchern führen.

Ein weiterer Nachteil bestehender Anlagen ist darin zu sehen, daß aufwendige Gasarmaturen notwendig sind, um bei einem Austausch einer Behältergruppe nach Entleerung die Funktion der Behältergruppen als Primär- und Zulieferseite zu vertauschen (siehe DE-PS 29 40 755). Dies ist außerdem von Hand durchzufahren und unterliegt somit der Sorgfalt des Bedienungspersonals.

Ein nach dem Prinzip der Aufteilung von Gasflaschen in zwei Gruppen arbeitendes Gasentnahmeverfahren ist darüber hinaus auch noch aus der US-PS 4 202 180 bekannt. Dort wird vor allem auf eine möglichst hohe Gasflußkapazität abgezielt, wozu an die gemeinsame Gasabgabeleitung der Gasbehälter ein Drucksensor angeschlossen ist, der bei Absinken des Drucks in dieser Leitung eine zusätzliche Leitungsverbindung der Abgabeleitung mit der Reservegruppe der Gasbehälter öffnet.Dadurch wird der gewünschte Gasfluß und der Abgabedruck aufrechterhalten. Dieses Verfahrensprinzip beansprucht also eine zusätzliche Leitungsverbindung mit Ventil und weist in den gezeigten Ausgestaltungen neben den den Behältergruppen zugeordneten primären und sekundären Druckreglern ein weiteres gemeinsames, den Abgabedruck letzlich einstellendes Ventil auf. Insgesamt stellen die Anordnungen gemäß der US-PS also komplizierte Gasentnahmeschaltungen dar, die einen erhablichen Installationsaufwand mit sich bringen und die hinsichtlich der Druckkonstanz aufgrund der prinzipiell anderen Zielsetzung (hohe Gasflußkapazität) nicht optimal sind.

Die Aufgabenstellung der vorliegenden Erfindung besteht daher darin, die oben beschriebenen Methoden zur Gasentnahme aus in zwei Gruppen aufgefeilten Gasbehältern weiter zu verbessern, deren Nachteile zu vermindern, sie wirtschaftlicher zu gestalten und zu automastisieren.

Diese Aufgabe wird erfindungsgemäß dadurch gelöst, daß die Einstellung der in beiden Entnahmeleitungen angeordneten Druckregler oder Druckreglersysteme (DRS) aufgrund des in der gemeinsamen Verbraucherleitung gemessenen Druckes parallel nachgesteuert wird, d.h. daß der gemessene Druck in der Verbraucherleitung mit einem vorgegebenen Solldruck verglichen wird und bei einer Abweichung eine entsprechende Nachsteuerung der Druckregler (DRS) durchgeführt wird, und zwar derart, daß der Druckwert in der Verbraucherleitung dem gewünschten Sollwert angeglichen wird, wobei die einzuhaltende Differenz in der Einstellung der Druckregler (DRS) aufrechterhalten wird.

Durch die erfindungsgemäße Regelung wird die Druckkonstanz in der Verbraucherleitung sowohl bei variierendem Gasmengenbedarf als auch in der "Doppelversorgungsphase", in der die zweite Behältergruppe die Gasmenge zuführt, die aus der ersten Behältergruppe nicht mehr geliefert wird, gewährleistet. Steigt z.B. der Gasmengenbedarf und fällt infolgedessen aufgrund der baulichen Eigenschaften der Druckreglersysteme der Druck in der Verbraucherleitung, so erfolgt ein Nachsteuern der Druckreglersysteme so, daß die benötigte Gasmenge mit dem gewünschten Druck geliefert wird. Um ein Aufschwingen des Regelkreises zu vermeiden, ist das Nachsteuern der Druckreglerventile auf die Regelkennlinien der Regelsysteme abzustimmen.

In der Doppelversorgungsphase ist die primär entleerte Behältergruppe nicht mehr in der Lage; den gesamten Gasbedarf zu decken; und der Druck in der Verbraucherleitung fällt. Dies wiederum löst ein Nachsteuern aus, bei dem ja die Einstellung beider Druckreglersysteme parallel verändert wird, wobei aber das Nachsteuern des Druckreglersystems der primär entleerten Seite zu keiner Druckerhöhung mehr führt, da diese Behältergruppe nahezu entleert ist. Weil aber, durch die Rückkoppelung mit der beiden Entnahmeleitungen gemeinsamen Verbraucherleitung ein weiterer Nachsteuerbedarf signalisiert wird, wird nun so lange nachgesteuert, bis das Druckregelsystem der zuliefernden Behälter gerade so eingestellt ist, daß wiederum der gewünschte Druck in der Verbraucherleitung besteht. Weiterhin wird aber, sobald Gas in den Primär zu entleerenden Behältern zur Verfügung steht, dies bevorzugt entnommen, was nach wie vor zu einer vollständigen Entleerung der Gasbehälter führt.

In einer vorteilhaften Weiterbildung des erfindungsgemäßen Verfahrens wird der Druck in der Entnahmeleitung der primär entleerten Behälter ständig gemessen und zunächst mit einer festzulegenden unteren Druckgrenze verglichen, wobei bei Unterschreiten der unteren Druckgrenze ein Anzeigesignal ausgelöst wird und daran anschließend wird der Druck mit einer ebenfalls festzulegenden oberen Druckgrenze verglichen, wobei bei Überschreiten der oberen Druckgrenze eine automatische Umschaltung der primären Entleerung auf die andere Behältergruppe durch Vertauschen der Einstellungen der Druckreglersysteme durchgeführt wird.

Allein durch die ständige Messung des Drucks in der Entnahmeleitung der primär entleerten Behälter und dem Vergleich mit zwei vorgebbaren Druckgrenzen wird eine optimale Kontrolle und Steuerung des Gasentnahmeverfahrens erreicht. Das "Leerwerden" der bevorzugt entleerten Behälter wird durch eine Anzeige signalisiert. Leuchtet diese auf, so ist, je nach Vorgabe der unteren Druckgrenze, eine neue Gaslieferung zu bestellen oder bereits die Behältergruppe sofort auszutauschen. Nach dem Austausch einer Behältergruppe steigt der Druck in der dazugehörigen Entnahmeleitung an.

Diese Druckfolge, also das Unterschreiten einer bestimmten unteren Druckgrenze und das anschließende Überschreiten einer oberen Druckgrenze, wird dazu ausgenutzt, um den Austausch einer Behälteruppe zu erkennen und die Umschaltung der primären Entleerung auf die andere Behältergruppe automatisch durchzuführen.

In eine besonders vorteilhaften Ausgestaltung des erfindungsgemäßen Verfahrens werden alle wesentlichen Verfahrensschritte, wie das Nachregeln der Druckregelsysteme und die Umschaltung der Behältergruppen, elektronisch realisiert. Das Nachsteuern der Druckregelsyteme kann z.B. mit Hilfe einer Vergleichseinheit durchgeführt werden, die einen Druckmeßwert, einen Solldruckwert und eine Druckdifferenz zu zwei Steuergrößen verarbeitet, die dann elektrisch ansteuerbaren Druckreglersystemen zugeführt werden. Ebenso kann die Umschaltung der Primärversorgung durch eine elektronische Einheit realisiert werden, die Druckvergleiche durchführt und entsprechend programmierte Entscheidungen fällt, wobei die Umschaltung mit einer Wechselschaltungseinheit durchgeführt werden kann, die im wesentlichen die Anschlüsse der Vergleichseinheit an die Druckreglersysteme vertauscht. Die elektronische Realisierung aller wesentlichen Verfahrensschritte hat insbesondere den Vorteil, daß komplizierte und teuere Gasarmaturen, wie z.B. ein Gaswegewechsler oder komplizierte Leitungsverzweigungen, nicht mehr benötigt werden. Dies bringt Einsparungen und erhöht die Sicherheit des Verfahrens.

Eine geeignete Vorrichtung zur Durchführung des Verfahrens ist gekennzeichnet durch in den Entnahmeleitungen und in der Verbraucherleitung angeordnete Druckmesser, durch eine Vergleichseinheit, die mit dem Druckmesser in der Verbraucherleitung und den Druckreglersystemen in den Entnahmeleitungen verbunden ist und die den in der Verbraucherleitung gemessenen Druck, einen vorgebbaren Solldruck und eine vorgebbare Druckdifferenz verarbeitet und Steuergrößen für die Druckreglersysteme liefert, und durch eine mit den Druckmessern in den Entnahmeleitungen verbundene Kontrolleinheit, die ständig Druckmeßwerte aus der Entnahmeleitung der primär entleerten Behälter mit vorgegebenen Werten vergleicht, wobei bei Unterschreiten einer unteren Druckgrenze ein Anzeigesignal ausgelöst wird und bei einem darauffolgenden Überschreiten einer höheren Druckgrenze automatisch eine Wechselschaltungseinheit angesteuert wird, die die Zuordnung der von der Vergleichseinheit erzeugten, leicht unterschiedlichen Steuergrößen zu den Druckreglern in den Entnahmeleitungen vertauscht sowie die Druckkontrolle auf die andere Entnahmeleitung umschaltet.

Besondere Vorteile ergeben sich, wenn die einzelnen Funktionseinheiten wie Vergleichseinheit, Kontrolleinheit und Wechselschaltungseinheit elektronisch arbeitende Einheiten sind, die zu einer Steuereinheit zusammengefaßt sind. Durch eine solche elektronsich arbeitende Steuereinheit vereinfacht sich der Aufbau einer erfindungsgemäßen Vorrichtung erheblich im Vergleich zu einer Realisierung mit gastechnischen Elementen und Armaturen.

Im folgenden wird mit Hilfe der schematischen Zeichnungen das erfindungsgemäße Verfahren und eine Vorrichtung zur Druchführung des Verfahrens näher erläutert.

Es zeigen :

Figur 1 schematischer Aufbau einer erfindungsgemäßen Gasversorgung,

Figur 2 Ablaufdiagramm der automatischen Kontrolle und Steuerung der Gasversorgung.

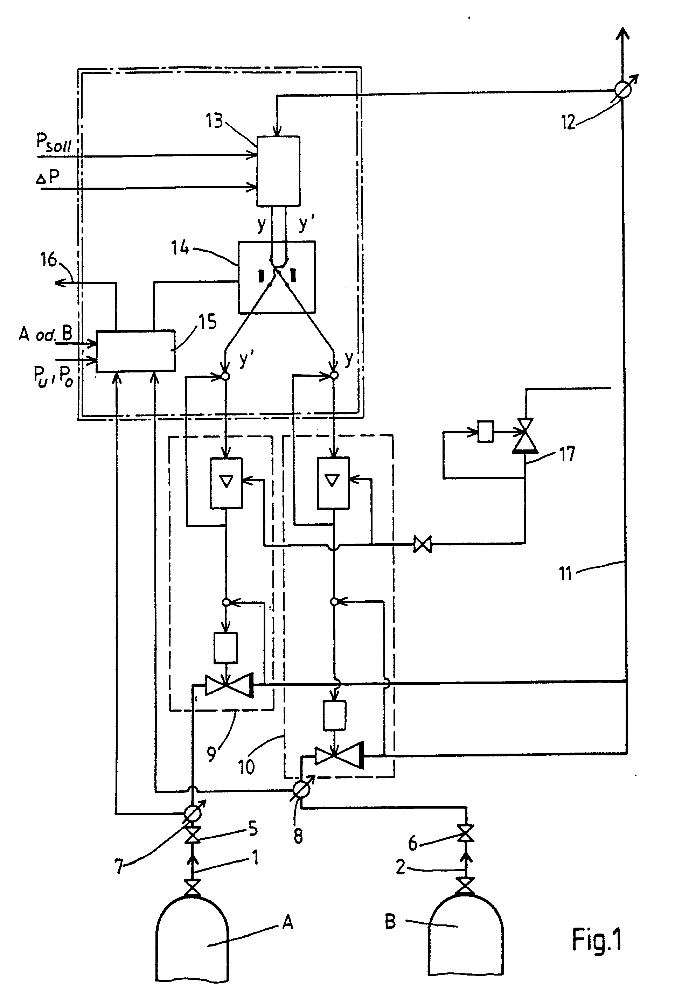

In Figur 1 ist eine erfindungsgemäße Gasversorgung schematisch dargestellt. Entnahmeleitungen 1 und 2 sind an die Behälter A und B angeschlossen. In den Entnahmeleitungen befinden sich Absperrventile 5, 6, Druckmesser 7, 8 und Druckregelsysteme 9, 10. Beide Entnahmeleitungen fließen zusammen in eine Verbraucherleitung 11, in der ebenfalls ein Druckmesser 12 angeordnet ist. Der Druckmesser 12 liefert ein Eingangssignal für eine Vergleichseinheit 13, die mit Hilfe eines zugeführten Solldruckwertes und eines Differenzdruckwertes zwei Steuerwerte Y und Y' bildet, die wiederum über eine Wechselschaltungseinheit 14 den Druckregelsystemen 9 und 10, die mit einer Hilfsgasversorgung 17 ausgestattet sind, zugeführt werden. Die Wechselschtungseinheit 14 ist mit einer Kontrolleinheit 15 verbunden, auf deren Signal hin die Wechselschaltungseinheit 14 die Zuordnung der Steuergrößen Y, Y' zu den Druckregelsystemen vertauscht. Darüberhinaus ist die Kontrolleinheit 15 mit einer Anzeige 16 verbunden und es werden ihr außerdem die Druckmeßwerte der Druckmesser 7, 8 die Druckgrenzen $p_u$ und $p_o$ und die Anfangseinstellung zugeführt bzw. eingegeben.

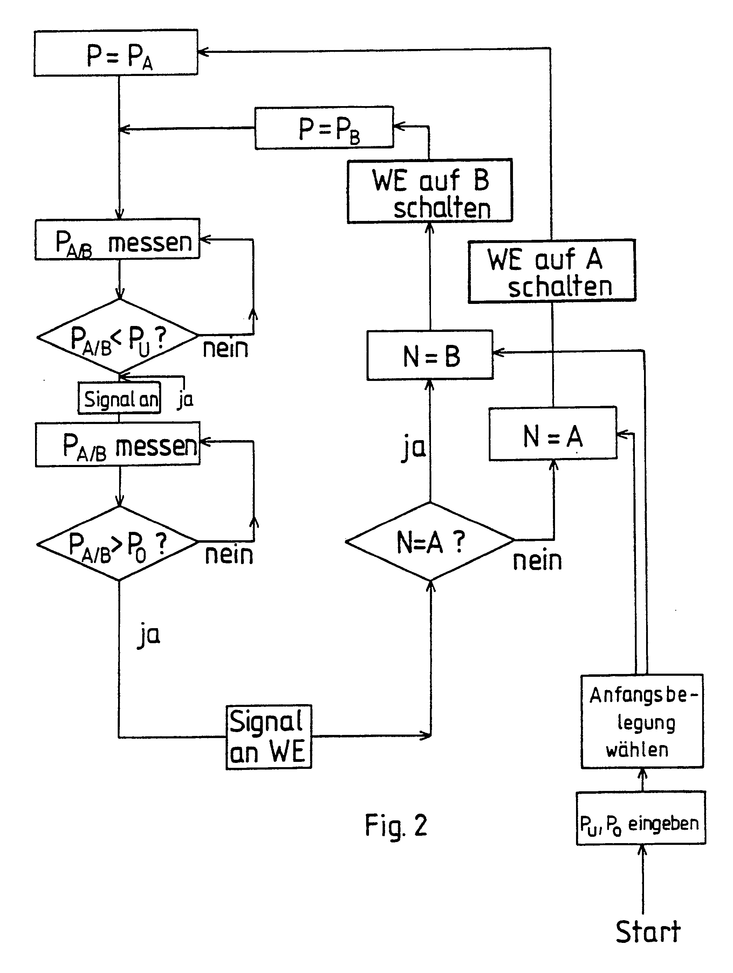

Figur 2 zeigt ein Flußdiagramm, das die Arbeitsweise der speicherprogrammierbaren Kontrolleinheit 15 im einzelnen erläutert. Zunächst müssen der Kontrolleinheit die Grunddaten wie die untere Druckgrenze $p_u$, die obere Druckgrenze $p_o$ sowie die Angabe, welcher Behälter zunächst bevorzugt entleert werden soll, eingegeben werden. Danach arbeitet die Kontrolleinheit selbständig entsprechend der aus dem Flußdiagramm hervorgehenden Logik. Nach der Wahl des primär zu entleerenden Behälters, z.B. A, wird ständig der Druck $p_A$ in der Entnahmeleitung des Behälters A gemessen und mit dem eingegebenen Druck $p_u$ verglichen. Solange die Antwort auf die Frage "$p_A$ kleiner $p_u$ ?" negativ ausfällt, werden keine weiteren Schritte durchgeführt. Fällt die Antwort jedoch positiv aus, wird die Anzeige 16 aktiviert und dann der Druckmeßwert $P_A$ mit der oberen Druckgrenze $p_o$ verglichen. Dabei wird erst dann eine weitere Aktion eingeleitet, wenn diese obere Druckgrenze von dem Meßwert $p_A$ überschritten wird. Dies kann nur der Fall sein, wenn die Behältergruppe A ausgetauscht worden ist. Deshalb wird in diesem Fall ein Signal an die Wechseleinheit 14 abgegeben, die dann einen Umschaltvorgang durchführt und die Zuordnung der Steuergrößen Y, Y' vertauscht. Daraufhin folgt die Eigenumschaltung der Kontrolleinheit zur Kontrolle des jetzt bevorzugt entleerten Behälters durch die Abfrage "N = A ?". Diese Frage ist in unserem Beispiel zu bejahen und es folgt eine Umbelegung der Einstellung, so daß die Druckkontrollen nun auf die Entnahmeleitung des Behälters B angewendet werden. Es ergibt sich somit eine vollständig selbständige Kontrolle und Steuerung der Abläufe.

**Ansprüche**

1. Verfahren zur Entnahme von Gas aus Gasbehältern, in denen Gas unter Druck in einem Lösungsmittel gelöst gespeichert ist, wobei die Gasbehälter in zwei Gruppen aufgeteilt werden und bei dem zu der jeweiligen Behältergruppe gehörende Entnahmeleitungen (1, 2) mit zugehörigen Absperrventilen (5, 6) und Druckreglern oder Druckregelersystemen (=DRS) (9, 10) herangezogen werden, wobei die Entnahmeleitungen (1, 2) anschließend in eine gemeinsame Verbraucherleitung (11) münden und wobei eine Behältergruppe durch die eine um eine geringfügige Differenz höhere Einstellung des zugehörigen Druckreglers (DRS) bevorzugt entleert wird, und bei dem nach Entleerung und Erneuerung einer Behältergruppe eine Umschaltung der bevorzugten Entleerung auf die andere Behältergruppe durchgeführt wird, dadurch gekennzeichnet, daß die Einstellung der in beiden Entnahmeleitungen angeordneten Druckregler (DRS) (9, 10) aufgrund des in der gemeinsamen Verbraucherleitung (11) gemessenen Druckes parallel nachgesteuert wird, d.h. daß der gemessene Druck in der Verbraucherleitung mit einem vorgegebenen Solldruck verglichen wird und bei einer Abweichung eine entsprechende Nachsteuerung der Druckregler (DRS) durchgeführt wird, und zwar derart, daß der Druckwert in der Verbraucherleitung dem gewünschten Sollwert angeglichen wird, wobei die einzuhaltende Differenz in der Einstellung der Druckregler (DRS) aufrechterhalten wird.

2. Verfahren nach Anspruch 1, dadurch gekennzeichnet, daß zur Umschaltung der bevorzugten Entleerung der Druck in der Entnahmeleitung der bevorzugt entleerten Behältergruppe ständig gemessen und zunächst mit einer festzulegenden unteren Druckgrenze verglichen wird, wobei bei Unterschreiten der unteren Druckgrenze ein Anzeigesignal ausgelöst wird, und anschließend der Druck mit einer festzulegenden oberen Druckgrenze verglichen wird, wobei bei Überschreiten der oberen Druckgrenze die Umschaltung der bevorzugten Entleerung von einer Behältergruppe auf die andere durch Vertauschen der Einstellwerte für die Druckregler (DRS) durchgeführt wird.

3. Verfahren nach den Ansprüchen 1 oder 2, dadurch gekennzeichnet, daß alle Verfahrensschritte elektronisch realisiert werden.

4. Vorrichtung zur Durchführung des Verfahrens zur Gasentnahme von in zwei Gruppen aufgeteilten Gasbehältern nach den Ansprüchen 1 und 2, wobei die zwei Behältergruppen sowie zugehörige Entnahmeleitungen mit Druckreglern und eine sich anschließende gemeinsame Verbraucherleitung vorgesehen sind, gekennzeichnet durch in den Entnahmeleitungen (1, 2) und in der Verbraucherleitung (11) angeordneten Druckmessern (7, 8, 12) sowie durch eine Vergleichseinheit (13), die mit dem Druckmesser (12) in der Verbraucherleitung (11) und den Druckreglern (DRSen) (9, 10) in den Entnahmeleitungen (1, 2) verbunden ist und außerdem Eingabemöglichkeiten von außen besitzt, wobei die Vergleichseinheit den in der Verbraucherleitung gemessenen Druck, einen von außen vorzugebenden Solldruck und eine vorgebbare Druckdifferenz zu Steuergrößen für die Druckregler (DRS) verarbeitet, und durch eine Kontrolleinheit (15), die mit den Druckmessern (7, 8) in den Entnahmeleitungen (1, 2) verbunden ist, wobei diese ständig die Druckmesswerte aus der Entnahmeleitung der primär entleerten Behältergruppe mit von außen eingebbaren Werten vergleicht und dabei bei Unterschreiten einer unteren Druckgrenze ein Anzeigesignal liefert und bei einem darauf folgenden Überschreiten einer höheren Druckgrenze eine Umschaltung der bevorzugten Entleerung bewirkt, wobei dies in Verbindung mit einer Wechselschaltungseinrichtung (14) erfolgt, die zwischen der Vergleicheinheit (13) und den Druckreglern (DRSen) (9, 10) angeordnet ist, und wobei diese die Zuordnung der von der Vergleichseinheit (13) erzeugten, leicht unterschiedlichen Steuergrößen zu den Druckreglern (DRSen) (9, 10) in den beiden Entnahmeleitungen vertauscht sowie die Druckkontrolle auf eine andere Entnahmeleitung umschaltet.

5. Vorrichtung nach Anspruch 3, dadurch gekennzeichnet, daß die Vergleichseinheit (13), die Kontrolleinheit (15) und die Wechselschaltungseinheit (14) als elektronisch arbeitende Einheiten ausgebildet sind und diese zu einer Steuereinheit zusammengefaßt sind.

**Claims**

1. A process for discharging gas from gas containers in which gas is stored under pressure dissolved in a solvent, wherein the gas containers are divided into two groups and wherein discharge lines (1, 2), assigned to the respective container group, with associated shut-off valves (5, 6), and pressure regulators or pressure regulating systems (PRS) (9, 10) are used, where the discharge lines (1, 2) subsequently lead into a common consumer line (11), and where a container group is preferentially discharged by a setting of the associated pressure regulator (=PRS) increased by a small difference, and wherein, following the discharge and renewal of a container group, the preferential discharge is switched over to the other container group, characterised in that the setting of the pressure regulators (PRS) (9, 10) arranged in the two discharge lines is followed up in parallel on the basis of the pressure measured in the common consumer line (11), i.e. the measured pressure in the consumer line is compared with a predetermined theoretical pressure and in the event of a deviation an appropriate follow up control of the pressure regulator (PRS) is carried out in such manner that the pressure value in the consumer line is adapted to the desired theoretical value, where the requisite difference in the setting of the pressure regulators (PRS) is maintained.

2. A process as claimed in claim 1, characterised in that for the switch-over of the preferential discharge, the pressure in the discharge line of the preferentially discharged container group is continuously measured and is firstly compared with a specified lower pressure limit, where a display signal is triggered when the lower pressure limit is undershot and

then the pressure is compared with a specified, upper pressure limit, where, in the event that the upper pressure limit is overshot, the preferential discharge is switched over from one container group to the other by exchanging the setting values for the pressure regulators (PRS).

3. A process as claimed in claim 1 or 2, characterised in that all the process steps are carried out electronically.

4. A device for implementing the process for discharging gas from gas containers divided into two groups as claimed in claims 1 and 2, where the two container groups and associated discharge lines are provided with pressure regulators and an adjoining, common consumer line is provided,

characterised by pressure gauges (7, 8, 12) which are arranged in the discharge lines (1, 2) and the consumer line (11), and by a comparison unit (13) which is connected to the pressure gauge (12) in the consumer line (11) and to the pressure regulators (PRS) (9, 10) in the discharge lines (1, 2) and also possesses external input facilities, where the comparison unit processes the pressure measured in the consumer line, an externally preset theoretical pressure, and a predeterminable pressure difference to form control variables for the pressure regulators (PRS) and

by a monitoring unit (15) which is connected to the pressure gauges (7, 8) in the discharge lines (1, 2), which monitoring unit continuously compares the pressure measured values from the discharge line of the primarily discharged container group with values which can be input externally and in the event that a lower pressure limit is undershot supplies a display signal and in the event that a higher pressure limit is subsequently overshot switches over the preferential discharge,

where this takes place in association with a change-over switching device (14) which is arranged between the comparison unit (13) and the pressure regulators (PRS) (9, 10), and where said change-over switching device changes over the assignment of the slightly differing control variables produced by the comparison unit (13) to the pressure regulators (PRS) (9, 10) in the two discharge lines and switches over the pressure monitoring to a different discharge line.

5. A device as claimed in claim 3, characterised in that the comparison unit (13), the monitoring unit (15) and the change-over switching unit (14) comprise electronically operating units and are combined to form a control unit.

**Revendications**

1. Procédé d'extraction de gaz contenu dans des réservoirs à gaz dans lesquels est stocké du gaz sous pression dissous dans un solvant les réservoirs de gaz étant répartis en deux groupes. Le procédé utilise les conduites de sortie (1, 2) de chacun des groupes de réservoirs avec les robinets d'arrêt (5, 6) et les régulateurs de pression ou systèmes de régulation de pression (=SRP) (9, 10), les conduites de sortie (1, 2) débouchant dans une conduite commune d'utilisateur (11), et un groupe de réservoirs est vidé de manière prioritaire par un réglage de différence légèrement plus élevé du régulateur de pression correspondant (SRP) et après avoir vidé et renouvelé un groupe de réservoirs, on commute l'évacuation préférentielle sur l'autre groupe de réservoirs, procédé caractérisé en ce que le réglage des régulateurs de pression (SRP) ou systèmes de régulation de pression (9, 10) associés aux deux conduites de sortie est asservi en parallèle sur la pression mesurée dans la conduite commune de l'utilisateur (11), c'est-à-dire que la pression mesurée dans la conduite de l'utilisateur est comparée à une pression de consigne, prédéterminée et en cas de différence, on effectue un asservissement correspondant du régulateur de pression (SRP) et cela pour que la valeur de la pression régnant dans la conduite de l'utilisateur soit rapprochée de la valeur de consigne souhaitée, la différence commune étant maintenue dans la position de réglage du régulateur de pression (SRP).

2. Procédé selon la revendication 1, caractérisé en ce que pour commuter l'évacuation préférentielle, on mesure en permanence la pression régnant dans la conduite de sortie du groupe de réservoirs à vider de manière préférentielle et on compare à une limite inférieure de pression, fixée, et en cas de dépassement de la limite inférieure de pression, on déclenche un signal d'affichage, puis on compare la pression à une limite supérieure de pression, fixée, et en cas de dépassement de la limite supérieure de pression, on commute l'évacuation préférentielle d'un groupe de réservoirs sur l'autre groupe en échangeant les valeurs de réglage des régulateurs de pression (SRP).

3. Procédé selon les revendications 1 et 2, caractérisé en ce que toutes les opérations sont effectuées de manière électronique.

4. Dispositif pour la mise en oeuvre du procédé d'extraction de gaz dans des réservoirs de gaz répartis en deux groupes, selon les revendications 1 et 2, les deux groupes de réservoirs ainsi que les conduites de sortie correspondantes étant munis de régulateurs de pression et débouchant dans une conduite commune d'utilisateur,

dispositif caractérisé par des manomètres (7, 8, 12) équipant les conduites de sortie (1, 2) ainsi que la conduite d'utilisateur (11) et par un comparateur (13) relié au manomètre (12) de la conduite d'utilisateur (11) et aux régulateurs de pression (SRP) (9, 10) des conduites de sortie (1, 2) avec en outre des possibilités d'introduction d'information à partir de l'extérieur, le comparateur traitant la pression mesurée de la conduite d'utilisateur, avec une pression de consigne prédéterminée, fournie de l'extérieur et une différence de pression prédéterminée pour obtenir les grandeurs de commande des régulateurs de pression et par une unité de contrôle (15) reliée aux manomètres (7, 8) des conduites de sortie (1, 2), cette unité comparant en permanence les pressions mesurées dans la conduite de sortie du groupe de réservoirs à vider en priorité, à des valeurs fournies de l'extérieur, et en cas de dépassement vers le bas d'une limite inférieure de pression, elle fournit un signal d'affichage et en cas de dépassement consécutif vers le haut d'une limite supérieure de pression, elle commande la commutation de l'évacuation prioritaire, ce qui se fait en liaison avec un dispositif de commutation (14) prévu entre le comparateur (13) et les régulateurs de pression (SRP) (9, 10) et cette unité échange l'association des grandeurs de commande légèrement différentes, fournies par le comparateur (13) aux régulateurs de pression (SRP) (9, 10) des deux conduites de sortie et commute aussi le contrôle de pression sur l'autre conduite de sortie.

5. Dispositif selon la revendication 3, caractérisé en ce que le comparateur (13), l'unité de contrôle (15) et l'unité de commutation (14) sont des ensembles à fonctionnement électronique réunis sous la forme d'une unité de commande.

Fig.1

$P = P_A$

$P = P_B$

WE auf B
schalten

WE auf A
schalten

$P_{A/B}$ messen

$P_{A/B} < P_U$ ?    nein

Signal an  ja

$P_{A/B}$ messen

$P_{A/B} > P_0$ ?    nein

ja

Signal
an WE

N = B

N = A

ja

N=A ?    nein

Anfangsbelegung
wählen

Fig. 2

$P_U, P_0$ eingeben

Start